# EUROPÄISCHE PATENTANMELDUNG

(11) **EP 3 585 071 A1**
(43) Veröffentlichungstag der Anmeldung: **25.12.2019**
(21) Anmeldenummer: 19173663.6
(22) Anmeldetag: 09.05.2019
(51) Int. Cl.: H04R 25/00, G10L 17/00, G06F 3/16, G10L 15/22, G10L 15/08

(54) **VERFAHREN ZUR STEUERUNG DER DATENÜBERTRAGUNG ZWISCHEN ZUMINDEST EINEM HÖRGERÄT UND EINEM PERIPHERIEGERÄT EINES HÖRGERÄTESYSTEMS SOWIE HÖRGERÄT**

(30) Priorität: 18.06.2018 DE 102018209822
(71) Anmelder: Sivantos Pte. Ltd., Singapore 539775 (SG)
(72) Erfinder: RÜCKERL, Gottfried, 90461 Nürnberg (DE); CAVALLARI, Riccardo, 91052 Erlangen (DE); MIJOVIC, Stefan, 91056 Erlangen (DE); MORALES RAMOS, Ricardo, 91054 Erlangen (DE)
(74) Vertreter: FDST Patentanwälte

(57) **Zusammenfassung**

Die Erfindung betrifft ein Verfahren zur Steuerung der Datenübertragung zwischen zumindest einem Hörgerät (3) und einem Peripheriegerät (7) eines Hörgerätesystems (1), wobei ein von dem Hörgerät (2) erfasstes Mikrofonsignal automatisch auf Eigenstimmanteile des Hörgeräteträgers untersucht wird, und wobei bei Erkennen von Eigenstimmanteilen eine nachfolgende Audiosequenz des Mikrofonsignals vom Hörgerät (3) auf das Peripheriegerät (7) übertragen wird. Weiter betrifft die Erfindung ein Hörgerät (3), welches als Teil eines Hörgerätesystems (1) zur Durchführung des vorbeschriebenen Verfahrens eingerichtet ist

## Beschreibung

Die Erfindung betrifft ein Verfahren zur Steuerung der Datenübertragung zwischen zumindest einem Hörgerät und einem Peripheriegerät eines Hörgerätesystems. Weiter betrifft die Erfindung ein Hörgerät zur Durchführung eines solchen Verfahrens.

Ein Hörgerät dient der Versorgung einer hörgeschädigten Person mit akustischen Umgebungssignalen, die zu einer Kompensation der jeweiligen Hörschädigung entsprechend verarbeitet und insbesondere verstärkt werden. Ein Hörgerät umfasst hierzu üblicherweise einen Eingangswandler, beispielsweise in Form eines Mikrofons, eine Signalverarbeitungseinheit mit einem Verstärker, sowie einen Ausgangswandler. Der Ausgangswandler ist in der Regel als Miniaturlautsprecher realisiert und wird auch als Hörer oder Receiver bezeichnet. Er erzeugt insbesondere akustische Ausgabesignale, die zum Gehör des Patienten geleitet werden und bei diesem die gewünschte Hörwahrnehmung erzeugen.

Um den zahlreichen individuellen Bedürfnissen entgegenzukommen, werden unterschiedliche Bauformen von Hörgeräten angeboten. Bei den sogenannten BTE-Hörgeräten (Behind-The-Ear, auch Hinter-dem-Ohr bzw. HdO) wird ein Gehäuse mit Komponenten wie einer Batterie und der Signalverarbeitungseinheit hinter dem Ohr getragen. Je nach Ausgestaltung kann der Receiver entweder direkt im Gehörgang des Trägers (sogenannte Ex-Hörer-Hörgeräte oder Receiver-in-the-Canal (RIC)-Hörgeräte) angeordnet sein. Alternativ ist der Receiver innerhalb des Gehäuses selbst angeordnet und ein flexibler, auch als Tube bezeichneter Schallschlauch leitet die akustischen Ausgabesignale des Receivers vom Gehäuse zum Gehörgang (Schlauch-Hörgeräte). Bei ITE- Hörgeräten (In-the-Ear, auch IdO bzw. In-dem-Ohr) wird ein Gehäuse, welches sämtliche funktionale Komponenten einschließlich des Mikrofons und des Receivers enthält, zumindest teilweise im Gehörgang getragen. CIC-Hörgeräte (Completely-in-Canal) sind den ITE-Hörgeräten ähnlich, werden jedoch vollständig im Gehörgang getragen.

Um eine drahtlose Kommunikation eines Hörgerätes mit einem externen Peripheriegerät wie einem Smartphone zu ermöglichen, werden mittlerweile häufig Funktechnologien (kurz: RF, z. B. Bluetooth, Bluetooth LE oder ähnliche Techniken) zur Übertragung eingesetzt. Hierbei sind keine externen Zusatzgeräte zur drahtlosen Kommunikation notwendig.

Dieser Übertragungsstandard bietet beispielsweise die Möglichkeit, einen Audiostream, also Audiosignale von einem Hörgerät an ein mit diesem gekoppeltes Smartphone zu senden. Dies kann beispielsweise zum Zwecke der Nutzung einer vom Smartphone verwaltete Sprachsteuerung erfolgen. Das Smartphone empfängt hierbei den Audiostream und leitet diesen an Anwendungen weiter, die den Audiostream analysieren und aus dem Sprachinhalt des Audiostreams Steueraktivitäten generieren (z. B. sprachgesteuertes Wählen, Starten und Beenden von Anwendungen oder ähnliches).

Eine Implementierung einer solchen vorbeschriebenen Funktion in ein Hörsystem ist grundsätzlich ebenfalls möglich. Hierzu muss ein Audiostream ausgehend vom Hörgerät permanent über die drahtlose RF-Verbindung an ein entsprechendes Smartphone gesendet werden. Eine permanente Datenübertragung erhöht jedoch den Datenverkehr auf der drahtlosen RF-Verbindung und damit geleichermaßen den Stromverbrauch des Hörgerätes erheblich. Dies wirkt sich beispielsweise negativ auf die Batterielebensdauer des Hörgeräts aus.

Alternativ bestünde die Möglichkeit, dass das Hörgerät selbst den Pegel des Audiosignals analysiert und nur dann die RF-Verbindung aktiviert, wenn der Schallpegel weit über einem vordefinierten Schwellenwert liegt. Diese Methode verhindert jedoch nicht, dass die die RF-Verbindung auch durch laute Umgebungsgeräusche aktiviert wird. Das Sprachniveau der Sprache kann sogar über einen ziemlich großen Bereich variieren. Selbst wenn das Audiosignal auf typische sprachähnliche Modulationen überprüft würde, könnte der Ursprung auch ein anderer Sprecher und nicht der Hörgeräteträger selbst sein.

Der Erfindung liegt daher die Aufgabe zugrunde eine effiziente und energiesparende Möglichkeit zur Übertragung eines Audiostreams von einem Hörgerät an ein Peripheriegerät anzugeben.

Diese Aufgabe wird erfindungsgemäß gelöst durch die Merkmale der Ansprüche 1 und 8. Vorteilhafte Ausgestaltungen der Erfindung sind in den Unteransprüchen und der nachfolgenden Beschreibung dargelegt.

Das erfindungsgemäße Verfahren wird zur Steuerung der Datenübertragung zwischen zumindest einem Hörgerät und einem Peripheriegerät eines Hörgerätesystems eingesetzt. Im Rahmen des Verfahrens wird ein von dem Hörgerät erfasstes Mikrofonsignal automatisch auf Eigenstimmanteile des Hörgeräteträgers untersucht und bei Erkennen von Eigenstimmanteilen eine nachfolgende Audiosequenz des Mikrofonsignals vom Hörgerät auf das Peripheriegerät übertragen.

Die Datenübertragung zwischen dem Hörgerät und dem Peripheriegerät wird also nur dann aktiviert, wenn in dem vom Hörgerät aufgenommenen Mikrofonsignal Eigenstimmanteile, also Sprachsequenzen oder Anteile des Hörgeräteträgers in dem Mikrofonsignal erkannt werden. Entsprechend kann nur der Hörgeräteträger selbst die Datenübertragung auf das Peripheriegerät initiieren. Andere Audiosignale wie beispielsweise Stimmsignale von Gesprächspartnern oder von einem im Hintergrund laufenden Radio, die vom Mikrofon des Hörgerätes (als entsprechende Mikrofonsignale) aufgezeichnet werden, initiieren die Datenübertragung nicht. Dies begrenzt einerseits die Aktivität des Hörgerätes und reduziert den Stromverbrauch der Hörgerätekomponenten, da die Daten- bzw. Signalübertragung nur dann stattfindet, wenn dies tatsächlich erforderlich ist bzw. vom Hörgeräteträger gewünscht wird. Insbesondere erfolgen die einzelnen Verfahrensschritte automatisiert.

Zur Verifizierung eines Eigenstimmanteile des Hörgeräteträgers enthaltenden Abschnitts des Mikrofonsignals (Audiosignal) umfasst das Hörgerät zweckmäßigerweise ein entsprechendes Spracherkennungsmodul (als separate Komponente oder als Teil der Signalverarbeitungseinheit). Das Mikrofonsignal selbst beinhaltet alle akustischen Informationen wie situationsbezogene Umgebungsgeräusche, Musik oder auch Sprachsignale. Zweckmäßigerweise wird ein Eigenspracherkennungsmodul ("Own Voice Detection") genutzt, um zu verifizieren, ob das Mikrofonsignal Sequenzen erhält, in denen Eigenstimmanteile des Hörgeräteträgers vorhanden sind. Erst dann wird die nachfolgende Audiosequenz auf das mit dem Hörgerät gekoppelte Peripheriegerät übertragen.

Als Peripheriegerät sind grundsätzlich alle Geräte einsetzbar, die zur Datenübertragung mit einem Hörgerät koppelbar sind. Insbesondere werden Bluetoothfähige Peripheriegeräte eingesetzt. Besonders bevorzugt wird als Peripheriegerät ein Smartphone als Teil des Hörgerätesystems eingesetzt.

Die Übertragung der Audiosequenz auf das Peripheriegerät wird zweckmäßigerweise dann beendet, wenn in der Audiosequenz keine Eigenstimmanteile mehr erkannt werden. Insbesondere wird die Audiosequenz nach der Erkennung von Eigenstimmanteilen in dem Mikrofonsignal nur dann und nur solange auf das Peripheriegerät übertragen, wie in der Audiosequenz Eigenstimmanteile des Hörgeräteträgers erkannt werden. Mit anderen Worten heißt dies, dass wenn keine Eigenstimmanteile in der auf das Peripheriegerät übertragenen Audiosequenz mehr erkannt werden, die Übertragung nach einer vorab festgelegten Nachlaufzeit abgebrochen oder zumindest temporär unterbrochen wird. Die Datenübertragung wird zweckmäßigerweise dann fortgesetzt oder wieder aufgenommen, wenn erneut Eigenstimmanteile des Hörgeräteträgers in dem Mikrofonsignal erkannt werden.

In einer bevorzugten Ausgestaltung wird nach Erkennen von Eigenstimmanteilen im Mikrofonsignal die nachfolgende Audiosequenz des Mikrofonsignals über einen vordefinierten Zeitraum Δt vom Hörgerät auf das Peripheriegerät übertragen. Unter einem vordefinierten Zeitraum Δt wird im Rahmen der Erfindung insbesondere ein Übertragungszeitfenster - beispielsweise mit einer Dauer von 30 Sekunden - verstanden. Innerhalb dieses Zeitraumes Δt bzw. des Übertragungszeitfensters wird die Audiosequenz an das Peripheriegerät übermittelt. Nach Ablauf des Zeitraums Δt wird die Übertragung zweckmäßigerweise abgebrochen. Alternativ bevorzugt wird die Übertragung der Audiosequenz über den vordefinierten Zeitraum Δt hinaus verlängert, wenn innerhalb des Zeitraumes Δt (Übertragungszeitfensters) weitere Eigenstimmanteile des Hörgeräteträgers enthaltende Audiosignale erkannt werden. Die Übertragung wird dann zweckmäßigerweise ab diesem Zeitpunkt um einen weiteren Zeitraum Δt verlängert.

Insbesondere wird im Rahmen der Erfindung die Reaktionszeit des mit dem Hörgerät gekoppelten Peripheriegerätes berücksichtigt. Spracherkennungsalgorithmen von Peripheriegeräten wie beispielsweise Smartphones sind in der Regel so konzipiert, dass eine Sprachanalyse - also vorliegend insbesondere eine Analyse der von dem Hörgerät übersandten Audiosequenz - durch das Peripheriegerät erst nach Erhalt eines speziellen Kennwortes gestartet wird (beispielsweise "Hey Google" zum Starten einer Suchmaschine). Hierbei besteht die Gefahr, dass bei einer zu langen Reaktionszeit der Eigenstimmerkennung durch das Hörgerät unter Berücksichtigung der anschließenden Aktivierungszeit der Übertragung der Audiosequenz auf das Peripheriegerät die gesamte Zeitspanne zu lang ist, um die vollständige Übertragung des Schlüsselwortes auf das Peripheriegerät zu ermöglichen. Eine Berücksichtigung des Kennwortes durch das Peripheriegerät wäre in diesem Fall nicht möglich.

Entsprechend wird vorteilhafterweise fortlaufend eine der Audiosequenz zeitlich vorgeschaltete Puffersequenz vom Hörgerät aufgenommen und in diesem gespeichert. Die Puffersequenz ist eine fortlaufend im Hörgerät zwischengespeicherte Teilsequenz des gegebenenfalls Eigenstimmanteile enthaltenden Mikrofonsignals. Sobald die Übertragung der Audiosequenz vom Hörgerät auf das Peripheriegerät durch die Eigenstimmerkennung im Mikrofonsignal ausgelöst wird, wird die zu diesem Zeitpunkt aufgezeichnete Puffersequenz quasi als "Schnappschuss" vom Hörgerät auf das Peripheriegerät übertragen. Durch die Übertragung der Puffersequenz wird also auch eine der Eigenstimmerkennung vorausgehende Teilsequenz des Mikrofonsignals übertragen. Auf diese Weise wird sichergestellt, dass beispielsweise ein für die Initialisierung der Spracherkennungssoftware eines Peripheriegerätes benötigtes Kennwort, welches bereits vor der Übertragung der Audiosequenz gesprochen wurde, auch vom Peripheriegerät empfangen wird. Die auf die übertragene Puffersequenz folgende Teilsequenz des Audiosignals wird dann, anschließend an die Puffersequenz, zeitverzögert auf das Peripheriegerät übertragen.

Die Speicherzeit für die Puffersequenz ist zweckmäßigerweise ausreichend lang, um die Zeit bis zum Beginn der Übertragung der Audiosequenz zu überbrücken. Sobald die Audiosequenz übertragen wird, wird zweckmäßigerweise ein ausreichend langer Zeitraum (beispielsweise 3 Sekunden) der inaktiven Sprache verwendet, um wieder auf das ursprüngliche Mikrofonsignal umzuschalten. Optional kann dies im Rahmen der Erfindung auch schrittweise erfolgen, bis das nicht verzögerte Signal erreicht ist

In einer möglichen Ausgestaltung der Erfindung wird die Puffersequenz vor der Übertragung der Audiosequenz vom Hörgerät auf das Peripheriegerät übertragen. In einer weiter möglichen Ausgestaltung wird bei Erkennen von Eigenstimmanteilen die zu diesem Zeitpunkt gespeicherte Puffersequenz gemeinsam mit der Audiosequenz auf das Peripheriegerät übertragen. Werden also Eigenstimmanteile in dem Mikrofonsignal (vor dem eigentlichen Beginn der Übertragung) oder in der Audiosequenz (nach bereits begonnener Übertragung) erkannt, werden die Audiosequenz und die Puffersequenz gleichzeitig auf das Peripheriegerät übertragen.

Bevorzugt werden die Audiosequenz des Mikrofonsignals und/oder die aufgenommene Puffersequenz drahtlos vom Hörgerät auf das Peripheriegerät übertragen. Insbesondere werden die zumindest eine erkannte Schlüsselsequenz und/oder das Audiosignal mittels eines strom-effizienten RF- Übertragungssystems übertragen. Bevorzugt ist die Übertragung mittels Bluetooth LE (BLE), welches im Vergleich zum "klassischen" Bluetooth einen geringeren Stromverbrauch hat.

Das erfindungsgemäße Hörgerätesystem ist zur Durchführung des vorbeschriebenen Verfahrens eingerichtet. Das Hörgerätesystem umfasst zumindest ein Hörgerät, welches wiederum zumindest ein Mikrofon zur Aufnahme eines Mikrofonsignals, ein Spracherkennungsmodul zur Untersuchung des Mikrofonsignals auf Eigenstimmanteile des Hörgeräteträgers, sowie eine Übertragungseinheit, die bei Erkennen von Eigenstimmanteilen zur Übertragung einer nachfolgenden Audiosequenz des Mikrofonsignals vom Hörgerät auf das Peripheriegerät eingerichtet ist.

Insbesondere umfasst das Hörgerätesystem zwei Hörgeräte (binaural gekoppeltes Hörgerätesystem). Es handelt sich also um ein binaurales Hörgerätesystem. Die beiden Hörgeräte des Hörgerätesystems sind zweckmäßigerweise über einen magnetischen Link gekoppelt, so dass die der Eigenstimmerkennung zugrundeliegenden Algorithmen (OVD-Algorithmus) auf beiden Hörgeräten entsprechend Daten austauschen.

Die Übertragungseinheit des zumindest einen Hörgerätes ist vorzugsweise dazu eingerichtet, die Audiosequenz nur dann und nur solange auf das Peripheriegerät zu übertragen, wie Eigenstimmanteile des Hörgeräteträgers in der Audiosequenz erkannt werden. Auf diese Weise ist gewährleistet, dass eine notwendige Initialisierung der Spracherkennungssoftware eines Peripheriegerätes erfolgt

Weiter bevorzugt ist die Übertragungseinheit des zumindest einen Hörgerätes dazu eingerichtet, nach Erkennen von Eigenstimmanteilen die nachfolgende Audiosequenz des Mikrofonsignals über einen vordefinierten Zeitraum vom Hörgerät auf das Peripheriegerät zu übertragen. Wenn also keine Eigenstimmanteile in der auf das Peripheriegerät übertragenen Audiosequenz mehr erkannt werden, wird die Übertragung abgebrochen oder zumindest temporär unterbrochen. In diesem Fall reduziert die Übertragungseinheit energieintensive Sendeaktivitäten.

In einer besonders vorteilhaften Ausgestaltung der Erfindung umfasst das Hörgerät eine Aufnahmeeinheit zur fortlaufenden Aufnahme und Speicherung einer der Audiosequenz zeitlich vorgeschalteten Puffersequenz. Die Puffersequenz ist eine Teilsequenz des die Eigenstimmanteile enthaltenden Mikrofonsignals und wird vom Hörgerät auf das Peripheriegerät übertragen, sobald die Übertragung der Audiosequenz vom Hörgerät auf das Peripheriegerät durch die Eigenstimmerkennung im Mikrofonsignal ausgelöst wird.

Mit anderen Worten bedeutet dies, dass zum Zeitpunkt des Auslösens der Eigenstimmerkennung die Übertragung des verzögerten Signals zum Peripheriegerät gestartet wird. Die Länge der Zeitverzögerung setzt sich dabei aus der typischen Ansprechzeit der Eigenstimmerkennung und dem Zeitraum für die volle Funktionsfähigkeit des RF-Links zusammen. Für die Funktion der Sprachsteuerung wird also immer ein jeweils geeignet verzögertes Audiosignal verwendet.

Bevorzugt ist die Übertragungseinheit des zumindest einen Hörgerätes dazu eingerichtet, die Puffersequenz vor der Übertragung der Audiosequenz vom Hörgerät auf das Peripheriegerät zu übertragen.
Die Übertragungseinheit des zumindest einen Hörgerätes ist vorzugsweise dazu eingerichtet, die Audiosequenz des Mikrofonsignals und/oder die aufgenommene Puffersequenz drahtlos vom Hörgerät auf das Peripheriegerät zu übertragen.
Das zumindest eine Hörgerät umfasst zweckmäßigerweise eine RF- Übertragungselektronik inklusive RF-Antenne.

Die für das erfindungsgemäße Verfahren beschriebenen Vorteile und bevorzugten Ausführungsformen gelten gleichermaßen für das erfindungsgemäße Hörgerät und können entsprechend sinngemäß auf dieses übertragen werden.

Nachfolgend werden Ausführungsbeispiele der Erfindung anhand einer Zeichnung näher erläutert. Dabei zeigen:
- Fig. 1: in schematischer Darstellung ein Hörgerätesystem mit einem Hörgerät und einem Smartphone als Peripheriegerät, sowie
- Fig. 2: in schematischer Darstellung den Verfahrensablauf zur Datenübertragung zwischen einem Hörgerät und einem Peripheriegerät.

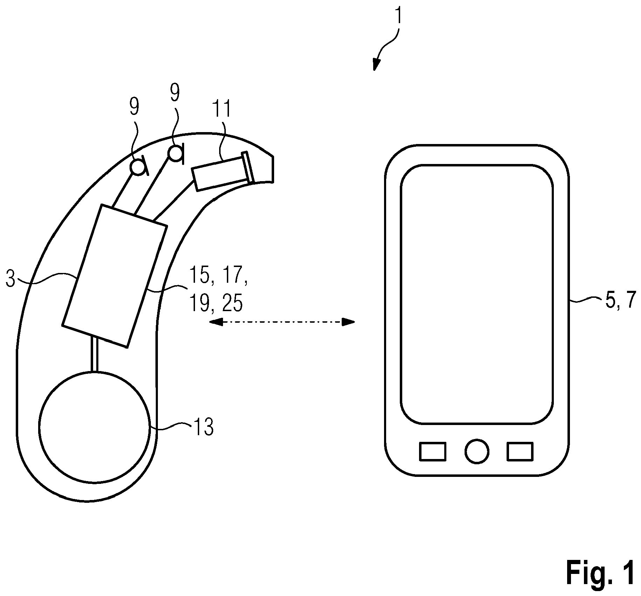

In Fig. 1 ist in schematischer Darstellung ein Hörgerätesystem 1 mit einem Hörgerät 3 und einem als Smartphone 5 ausgebildeten Peripheriegerät 7 gezeigt. Das Hörgerät 3 umfasst zwei Mikrofone 9, einen Hörer bzw. Receiver 11 und eine Batterie 13. Weiter umfasst das Hörgerät 3 eine Signalverarbeitungseinheit 15 mit einem Spracherkennungsmodul 17 zur Untersuchung des Mikrofonsignals auf Eigenstimmanteile des Hörgeräteträgers sowie eine Übertragungseinheit 19, mittels derer bei Erkennen von Eigenstimmanteilen eine nachfolgende Audiosequenz des Mikrofonsignals vom Hörgerät 3 auf das Peripheriegerät 7 übertragen wird.

Das Hörgerät 3 ist über eine stromsparende RF-Übertragungstechnik mit dem Smartphone 5 gekoppelt, so dass zwischen beiden Komponenten des Hörgerätesystems 1 eine Datenübertragung erfolgen kann. Die Datenübertragung wird zu dem Zeitpunkt initiiert, wenn in dem vom Hörgerät 3 aufgenommenen Mikrofonsignal Eigenstimmanteile, also eine Audiosequenz mit vom Hörgeräteträger gesprochenen Stimmsignalen werden.

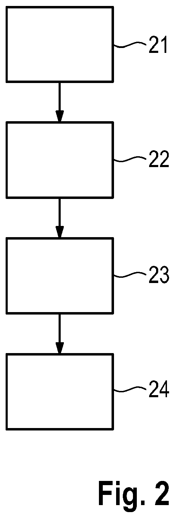

In Fig. 2 ist der Verfahrensablauf der Datenübertragung zwischen dem Hörgerät 3 und dem Smartphone 5 detailliert beschrieben. Es wird Bezug auf das vorbeschriebene Hörgerätesystem 1 gemäß Fig. 1 genommen. Selbstverständlich können jedoch auch anders ausgebildete Hörgeräte und/oder Peripheriegeräte eingesetzt sein, zwischen denen eine Datenübertragung erfolgt.

Zu Beginn wird ein Mikrofonsignal von den Mikrofonen 9 des Hörgerätes 3 erfasst (Schritt 21). Dieses Mikrofonsignal wird mittels des Spracherkennungsmoduls 17 kontinuierlich analysiert und auf in dem Mikrofonsignal enthaltenen Eigenstimmanteile untersucht (Schritt 22).

Werden Stimmanteile des Hörgeräteträgers im Mikrofonsignal erkannt, so wird die nachfolgende Audiosequenz mittels der Übertragungseinheit 19 des Hörgerätes 3 von diesem auf das Smartphone 5 übertragen (Schritt 23). Vorliegend erfolgt die Übertragung in einem Zeitfenster Δt von 30 Sekunden. Werden nach Ablauf des Zeitfensters Δt keine Eigenstimmanteile mehr erkannt, wird die Übertragung unterbrochen. Ansonsten wird die Übertragung verlängert (jeweils durch Beginn eines neuen Zeitfensters Δt zu Beginn der Detektion von Eigenstimmanteilen in der Audiosequenz) (Schritt 24).

Weiter wird mittels einer Aufnahmeeinheit 25 kontinuierlich eine Puffersequenz des Mikrofonsignals aufgenommen. Ist die Summe der Reaktionszeiten des Gesamtsystems aus Eigenstimmerkennung, dem Übertragungssystem im Hörgerät, dem Empfangssystem im Smartphone 5 und der entsprechenden Spracherkennungssoftware des Smartphones 5 zu lang, wird diese Puffersequenz zusätzlich zur Audiosequenz auf das Smartphone 5 übermittelt. Auf dieses Weise wird sichergestellt, dass beispielsweise ein für die Initialisierung der Spracherkennungssoftware des Smartphones 5 benötigtes Kennwort, welches bereits vor der Übertragung der Audiosequenz gesprochen wurde, auch vom Smartphone 5 empfangen wird.

Vorliegend zwar nicht bildlich dargestellt, jedoch besonders von Vorteil umfasst das Hörgerätesystem 1 zwei Hörgeräte 3. Hierbei handelt es sich um ein binaural gekoppeltes Hörgerätesystem 1, bei denen die beiden Hörgeräte 3 über einen magnetischen Link miteinander gekoppelt sind. Die der Eigenstimmerkennung zugrundeliegenden Algorithmen (OVD-Algorithmen) werden durch beide Hörgeräte 3 genutzt. Die vorliegend zum Hörgerätesystem 1 mit einem Hörgerät 3 erfolgten Ausführungen lassen sich hierbei sinngemäß auf das binaurale Hörgerätesystem 1 übertragen.

Die Erfindung wird an den vorstehend beschriebenen Ausführungsbeispielen besonders deutlich, ist auf diese Ausführungsbeispiele gleichwohl aber nicht beschränkt. Vielmehr können weitere Ausführungsformen der Erfindung aus den Ansprüchen und der vorstehenden Beschreibung abgeleitet werden.

### Bezugszeichenliste

- 1: Hörgerätesystem
- 3: Hörgerät
- 5: Smartphone
- 7: Peripheriegerät
- 9: Mikrofon
- 11: Receiver
- 13: Batterie
- 15: Signalverarbeitungseinheit
- 17: Spracherkennungsmodul
- 19: Übertragungseinheit
- 21: Verfahrensschritt 1
- 22: Verfahrensschritt 2
- 23: Verfahrensschritt 3
- 24: Verfahrensschritt 4
- 25: Aufnahmeeinheit

## Patentansprüche

1. Verfahren zur Steuerung der Datenübertragung zwischen zumindest einem Hörgerät (3) und einem Peripheriegerät (7) eines Hörgerätesystems (1),
- wobei ein von dem Hörgerät (2) erfasstes Mikrofonsignal automatisch auf Eigenstimmanteile des Hörgeräteträgers untersucht wird, und
- wobei bei Erkennen von Eigenstimmanteilen eine nachfolgende Audiosequenz des Mikrofonsignals vom Hörgerät (3) auf das Peripheriegerät (7) übertragen wird.

2. Verfahren nach Anspruch 1,
wobei die Audiosequenz nur dann und nur solange auf das Peripheriegerät (7) übertragen wird, wie Eigenstimmanteile des Hörgeräteträgers in der Audiosequenz erkannt werden.

3. Verfahren nach Anspruch 1,
wobei nach Erkennen von Eigenstimmanteilen die nachfolgende Audiosequenz des Mikrofonsignals über einen vordefinierten Zeitraum (Δt) vom Hörgerät (3) auf das Peripheriegerät (7) übertragen wird.

4. Verfahren nach einem der vorhergehenden Ansprüche,
wobei fortlaufend eine der Audiosequenz zeitlich vorgeschaltete Puffersequenz vom Hörgerät (3) aufgenommen und in diesem gespeichert wird.

5. Verfahren nach Anspruch 4,
wobei die Puffersequenz vor der Übertragung der Audiosequenz vom Hörgerät (3) auf das Peripheriegerät (7) übertragen wird.

6. Verfahren nach Anspruch 4 oder 5,
wobei bei Erkennen von Eigenstimmanteilen die zu diesem Zeitpunkt gespeicherte Puffersequenz gemeinsam mit der Audiosequenz auf das Peripheriegerät (7) übertragen wird.

7. Verfahren nach einem der Ansprüche 4 bis 6,
wobei die Audiosequenz des Mikrofonsignals und/oder die aufgenommene Puffersequenz drahtlos vom Hörgerät (3) auf das Peripheriegerät (7) übertragen werden.

8. Hörgerätesystem (1) mit zumindest einem Hörgerät (3), das zumindest eine Hörgerät (3) umfassend zumindest ein Mikrofon (9) zur Aufnahme eines Mikrofonsignals, ein Spracherkennungsmodul (17) zur Untersuchung des Mikrofonsignals auf Eigenstimmanteile des Hörgeräteträgers, sowie eine Übertragungseinheit (19), die bei Erkennen von Eigenstimmanteilen zur Übertragung einer nachfolgenden Audiosequenz des Mikrofonsignals vom Hörgerät (3) auf ein Peripheriegerät (7) eingerichtet ist.

9. Hörgerätesystem (1) nach Anspruch 8,
wobei die Übertragungseinheit (19) des zumindest einen Hörgerätes (3) dazu eingerichtet ist, die Audiosequenz nur dann und nur solange auf ein Peripheriegerät (7) zu übertragen, wie Eigenstimmanteile des Hörgeräteträgers in der Audiosequenz erkannt werden.

10. Hörgerätesystem (1) nach Anspruch 8 oder 9,
wobei die Übertragungseinheit (19) des zumindest einen Hörgerätes (3) dazu eingerichtet ist, nach Erkennen von Eigenstimmanteilen die nachfolgende Audiosequenz des Mikrofonsignals über einen vordefinierten Zeitraum (Δt) vom Hörgerät (3) auf ein Peripheriegerät (7) zu übertragen.

11. Hörgerätesystem (1) nach einem der Ansprüche 8 bis 10, umfassend eine Aufnahmeeinheit (25) zur fortlaufenden Aufnahme und Speicherung einer der Audiosequenz zeitlich vorgeschalteten Puffersequenz.

12. Hörgerätesystem (1) nach Anspruch 11,
wobei die Übertragungseinheit (19) des zumindest einen Hörgerätes (3) dazu eingerichtet ist, bei Erkennen von Eigenstimmanteilen im Mikrofonsignal die zu diesem Zeitpunkt gespeicherte Puffersequenz gemeinsam mit der Audiosequenz auf das Peripheriegerät (7) zu übertragen.

13. Hörgerätesystem (1) nach Anspruch 11 oder 12,
wobei die Übertragungseinheit (19) des zumindest einen Hörgerätes (3) dazu eingerichtet ist, die Puffersequenz vorder Übertragung der Audiosequenz vom Hörgerät (3) auf das Peripheriegerät (7) zu übertragen.

14. Hörgerätesystem (1) nach einem der Ansprüche 11 bis 13,
wobei die Übertragungseinheit (19) des zumindest einen Hörgerätes (3) dazu eingerichtet ist, die Audiosequenz des Mikrofonsignals und/oder die aufgenommene Puffersequenz drahtlos vom Hörgerät (3) auf das Peripheriegerät (7) zu übertragen.
